# EUROPÄISCHE PATENTANMELDUNG

(11) **EP 4 349 663 A1**
(43) Veröffentlichungstag der Anmeldung: **10.04.2024**
(21) Anmeldenummer: 23196694.6
(22) Anmeldetag: 12.09.2023
(51) Int. Cl.: B60R 21/013, B60R 21/0134

(54) **PARAMETRISIERUNG EINER KOLLISION EINES FAHRZEUGS**

(30) Priorität: 06.10.2022 DE 102022210567
(71) Anmelder: ZF Friedrichshafen AG, 88046 Friedrichshafen (DE)
(72) Erfinder: Balavendra Raj, Arun Muthu, 85049 Ingolstadt (DE); Kampe, Wolfgang, 85051 Ingolstadt (DE); Grotz, Bernhard, 70734 Fellbach (DE); Hachmann, Kilian, 85139 Wettstetten (DE); Metzger, Jürgen, 88709 Meersburg (DE); Straßburger, Philipp, 88097 Eriskirch (DE); Nadarajan, Parthasarathy, 88213 Ravensburg (DE)
(74) Vertreter: ZF Friedrichshafen AG

(57) **Zusammenfassung**

Die Erfindung betrifft ein Verfahren (500) zum Bestimmen einer Parametrisierung für eine Fahrzeugkollision, wobei das Verfahren folgende Schritte umfasst: Modellieren (505) eines ersten Umrisses eines ersten Fahrzeugs (100); Modellieren (510) eines zweiten Umrisses eines Kollisionspartners (110) des ersten Fahrzeugs; Modellieren (515) einer Kollision des ersten Fahrzeugs mit dem Kollisionspartner basierend auf einer relativen Bewegung des ersten und zweiten Umrisses (100, 110), wobei bei der relativen Bewegung der erste und zweite Umriss (100, 110) sich zumindest entlang eines Teils der relativen Bewegung überlappen; Bestimmen (520) der Parametrisierung basierend auf einem Überlappungsmaß (120) der Umrisse. Die Erfindung betrifft außerdem entsprechende Vorrichtungen.

## Beschreibung

Die vorliegende Erfindung betrifft das Bestimmen einer Parametrisierung einer Kollision eines Fahrzeugs, insbesondere zur Ansteuerung eines Kollisionsvorbereitungssystems wie einem Pre-Crash-System.

Kollidiert ein Fahrzeug mit einem anderen Objekt, kann schon vorher abgeschätzt werden, mit welchen Folgen bei der Kollision zu rechnen ist. Beispielsweise kann auf einer vorbestimmten Skala angegeben werden, wie schwer die Folgen der Kollision wiegen. Eine auf diese Weise bestimmte Schwere des Zusammenstoßes kann auf die Gesundheit einer oder mehrerer Personen an Bord des Fahrzeugs bezogen sein. Beispielsweise kann die schwerste Verletzung einer Person an Bord als Maximum Abbreviated Injury Scale (MAIS) Wert ausgedrückt werden. Andere bekannte Klassifikationssysteme umfassen OLC (Occupant Load Criterion) oder EES (Energy Equivalent Speed).

Die bestimmte Schwere kann verwendet werden, um das Fahrzeug möglichst so zu steuern und/oder Fahrzeugkomponenten, z.B. Aktuatoren so anzusteuern, dass die Folgen der Kollision abgemildert werden. Das Fahrzeug kann über ein Pre-Crash-System verfügen, das bestimmte Aktuatoren ansteuert, um Verletzungen zu minimieren. Ein Sicherheitsgurt einer Person an Bord kann gestrafft werden oder eine Motorhaube kann in eine Sicherheitsposition angehoben werden, wenn eine Kollision mit einer Person außerhalb des Fahrzeugs bevorsteht.

Kollisionen unterliegen jedoch komplexen physikalische Prozessen, deren Modellierung üblicherweise die Kenntnis einer Vielzahl von Parametern erfordert, die nicht immer leicht verfügbar sind. So ist beispielsweise ein Fahrzeuggewicht eines auf einem Kollisionskurs befindlichen entgegenkommenden Fahrzeugs oder die Materialsteifigkeit einer Fahrzeugkabine des Fahrzeugs nicht immer verfügbar. Darüber hinaus erfordern komplexe Modellierungen oder Simulationen erhebliche Verarbeitungsressourcen und Bearbeitungszeit, was einerseits Kosten erhöht und andererseits die Einsatzfähigkeit einschränken kann, insbesondere wenn es gilt, in kurzer Zeit zu einem belastbaren Ergebnis zu gelangen.

Eine Aufgabe der Erfindung besteht darin, eine einfache Bestimmung einer Parametrisierung einer Fahrzeugkollision zu ermöglichen. Die Erfindung löst diese Aufgabe mittels der Gegenstände der unabhängigen Ansprüche. Unteransprüche geben bevorzugte Ausführungsformen wieder.

Die Erfindung beruht auf der Erkenntnis, dass die Parametrisierung der Kollision auf der Basis einer modellierten geometrischen Überlappung der Umrisse der Kollisionspartner eine schnelle und ausreichend genaue Parametrisierung einer Kollision erlaubt. Analog zu einer scheinbaren Überlappung der Sonne durch den Mond bei einer Eklipse kann die Überlappung der Fahrzeuge während einer Kollision bestimmt werden. Durch den hierin vorgeschlagenen, geometriebasierten Ansatz kann insbesondere die Schwere einer Kollision schnell und zuverlässig auch ohne umfassende Kenntnis fahrzeugbezogener Parameter bestimmt werden.

Erfindungsgemäß ist ein Verfahren zum Bestimmen einer Parametrisierung für eine Fahrzeugkollision vorgesehen. Das Verfahren umfasst das Modellieren eines ersten Umrisses eines ersten Fahrzeugs; das Modellieren eines zweiten Umrisses eines Kollisionspartners des ersten Fahrzeugs; und das Modellieren einer Kollision des ersten Fahrzeugs mit dem Kollisionspartner basierend auf einer relativen Bewegung des ersten und zweiten Umrisses. Bei der relativen Bewegung überlappen sich der erste und zweite Umriss zumindest entlang eines Teils der relativen Bewegung. Das Verfahren umfasst außerdem das Bestimmen der Parametrisierung basierend auf einem Überlappungsmaß der Umrisse. Dabei können unterschiedliche Ansätze zur Bestimmung des Überlappungsmaßes angewendet werden.

Das Verfahren kann insbesondere für das erste Fahrzeug und/oder mittels einer Einrichtung des ersten Fahrzeugs durchgeführt werden, etwa einer dedizierten Verarbeitungseinrichtung. Das Bestimmen kann als Prognose für eine wahrscheinliche und/oder mögliche nachfolgende Kollision erfolgen. Die Bestimmung kann für einen vorbestimmten Zeithorizont durchgeführt werden, beispielsweise für einige 100 ms.

Das Verfahren kann insbesondere ein computerimplementiertes Verfahren sein, das etwa mittels einer Verarbeitungseinrichtung durchgeführt und/oder gesteuert wird. Die Modellierung der relativen Bewegung der Umrisse zueinander erfordert verhältnismäßig geringe Verarbeitungsressourcen und kann mit geringem Zeitaufwand durchgeführt werden, etwa in Echtzeit und/oder basierend auf einer durchgeführten Verkehrs- oder Umgebungsüberwachung.

Das Überlappungsmaß kann angeben, wie stark sich die Konturen der Fahrzeuge während der Kollision gegenseitig überlappen. Je größer die Überlappung ist, desto größer kann das Überlappungsmaß sein. Ist die Überlappung der Fahrzeuge gering, kann beispielsweise nur ein Außenspiegel eines der Fahrzeuge beschädigt werden. Ist die Überlappung hingegen groß, so kann ein ernster Schaden für eine Person an Bord eines Fahrzeugs zu befürchten sein.

Es kann vorgesehen sein, dass das Überlappungsmaß auf einer Linienüberlappung der Umrisse und/oder einer Flächenüberlappung der Umrisse basiert. Eine Linienüberlappung kann insbesondere durch einen Anteil und/oder eine Gesamtlänge von Umrisslinien repräsentiert sein, welche bei der Bewegung zu einem bestimmten Zeitpunkt überlappt sind, etwa bezüglich des ersten Umrisses und/oder des zweiten Umrisses.

Eine Flächenüberlappung kann einer Fläche des ersten und/oder zweiten Umrisses entsprechen, welche etwa zu einem Zeitpunkt der Bewegung überlappt ist. Derartige Überlappungen und/oder deren zeitliche Entwicklung können durch geometrische Betrachtungen modelliert sein, was eine einfache Verarbeitung ermöglicht. Die Linienüberlappung und die Flächenüberlappung können jeweils bezüglich einer vorbestimmten Ebene bestimmt werden, in der die Umrisse der Fahrzeuge betrachtet werden. Die Ebene erstreckt sich bevorzugt in horizontaler oder in vertikaler Richtung. Die sich vertikal erstreckende Ebene kann sich zusammen mit einem der Fahrzeuge in der Horizontalen bewegen.

In einigen Varianten können eine Flächenüberlappung und/oder Linienüberlappung einem Anteil der überlappten Fläche und/oder Linienfläche an der Gesamtfläche und/oder Umrisslinienlänge eines oder beider Kollisionspartner entsprechen. Anders ausgedrückt kann das Überlappungsmaß absolut oder relativ, mit Bezug auf eines der Fahrzeuge bzw. dessen Umrisse, angegeben sein.

Das Überlappungsmaß kann auch auf einer Durchdringung der bestimmten Umrisse beruhen. Die Durchdringung kann dasjenige Volumen betreffen, das während der Kollision durch beide Fahrzeuge eingenommen wird. Das überlappte Volumen kann absolut oder als Anteil eines Gesamtvolumens eines der Fahrzeuge bzw. seinen Umrissen angegeben werden.

Es kann vorgesehen sein, dass das Überlappungsmaß einer maximalen Überlappung und/oder einer zeitlichen Änderung der Überlappung entspricht, etwa einer maximalen zeitlichen Änderung, und/oder eine solche Überlappung und/oder Änderung repräsentiert. Die maximale Überlappung kann insbesondere einer maximalen Linienüberlappung und/oder Flächenüberlappung oder einer maximalen Durchdringung entsprechen, etwa entlang der relativen Bewegung. Eine maximale Überlappung kann einem bestimmten Zeitpunkt entsprechen.

Eine zeitliche Änderung kann einem oder mehreren Zeitpunkten zugeordnet sein und/oder entsprechen. Ein Zeitpunkt maximaler Überlappung kann einer der betrachteten Zeitpunkt(e) einer zeitlichen Änderung sein, oder ein anderer Zeitpunkt. Dieser Ansatz erlaubt eine effiziente Verarbeitung. Alternativ oder zusätzlich kann ein Überlappungsmaß eine eindimensionale Projektion, etwa eine Breite und/oder Länge eines Überlappungsbereiches oder einer Überlappungsfläche berücksichtigen und/oder darauf basieren, etwa im Verhältnis zu einer Gesamtbreite und/oder Gesamtlänge eines oder beider Umrisse, insbesondere des ersten Umrisses. Somit können etwa Rotationseffekte und/oder einseitige Belastung berücksichtigt werden.

Eine maximale Überlappung kann derart bestimmt sein, dass eine einmalige oder mehrmalige Überschreitung eines zugeordneten Schwellenwertes das Vorhandensein maximaler Überlappung indiziert. Insbesondere kann eine maximale Überlappung einer maximalen Überlappungsklassifizierung entsprechen, bei welcher alle Überlappungen, die oberhalb des Schwellenwertes liegen oder diesen erreichen, hinsichtlich der Überlappung gleich klassifiziert werden. Analog kann hinsichtlich einer maximalen Änderung oder Änderungsrate verfahren werden.

Entlang der Bewegung der Fahrzeuge können mehrere Überlappungen modelliert und/oder bestimmt sein, etwa zu unterschiedlichen Zeitpunkten oder an unterschiedlichen Orten. Das Überlappungsmaß kann die Stärke der Überlappung angeben oder auch, wie stark sich die Überlappung ändert. Dazu kann die Änderung als zeitliche Ableitung der Überlappung bestimmt werden.

In einigen Varianten kann die Parametrisierung eine Schwere der Kollision repräsentieren, etwa hinsichtlich Fahrzeugschäden und/oder Personenschäden. Die Parametrisierung kann allgemein auf das erste Fahrzeug und/oder den Kollisionspartner bezogen sein. Alternativ oder zusätzlich kann die Parametrisierung eine Überlebenswahrscheinlichkeit eines oder mehrerer Passagiere, eine Schwere einer Verletzung eines Passagiers, eine Eindringtiefe des Fahrzeugs in einen der Kollisionspartner, und/oder eine Abprall-Wahrscheinlichkeit und/oder Abprallrichtung bei der Kollision repräsentieren. Eine solche Parametrisierung kann insbesondere für eine nachfolgende Ansteuerung eines Fahrzeugs eine gute Basis sein.

Insbesondere kann die Parametrisierung und/oder das Modellieren der Kollision und/oder das Überlappen und/oder das Modellieren der relativen Bewegung ferner auf Sensordaten basieren und/oder bestimmt sein. Dazu können Sensoren an Bord des betrachteten Fahrzeugs angebracht sein. Somit kann die Parametrisierung an aktuelle Gegebenheiten angepasst sein. Ein Sensor kann beispielhaft dazu eingerichtet sein, eine Geschwindigkeit, eine Beschleunigung, eine Bewegung oder Relativbewegung oder auch eine Verformung des Fahrzeugs zu bestimmen.

Es kann vorgesehen sein, dass die Modellierung des ersten Umrisses und/oder des zweiten Umrisses auf Teilumrissen basiert. Dies erlaubt eine verbesserte Auflösung und/oder Berücksichtigung besonders gefährdeter Teile eines Fahrzeugs. Insbesondere kann einer der Umrisse, wie der erste Umriss, in Teilumrisse unterteilt sein. Die Teilumrisse können Funktionseinheiten und/oder Baueinheiten des Fahrzeugs und/oder eines Objekts entsprechen. Die Parametrisierung kann auf Überlappung der Teilumrisse basieren, etwa hinsichtlich Fläche und/oder Linien. Etwa kann die Parametrisierung auch Informationen aus dem Fahrzeuginnenraum, wie z.B. eine Anwesenheit oder Abwesenheit von Personen in einem Teilumriss berücksichtigen. Dabei können unterschiedliche Teilumrisse in unterschiedlichem Maß überlappt sein, etwa abhängig von der relativen Bewegung und/oder dem zweiten Umriss. Allgemein kann das Bestimmen der Parametrisierung und/oder des Überlappungsmaßes auf unterschiedlicher Gewichtung unterschiedlicher Teilumrisse basieren, etwa basierend auf unterschiedlicher Steifigkeit, und/oder Gefährdung, und/oder Personenpräsenz, und/oder Energieaufnahme und/oder Verformungsfähigkeit, und/oder Schadensanfälligkeit.

Es kann vorgesehen sein, dass die relative Bewegung eine durch die Kollision unbeeinflusste Bewegung repräsentieren kann. Dies erlaubt eine einfache Verarbeitung, wobei die Überlappung eine gute Abschätzung für die Parametrisierung bietet, insbesondere für eine Schwere der Kollision. Alternativ kann aber vorgesehen sein, dass eine Richtungsänderung und/oder Geschwindigkeitsänderung bei der Kollision berücksichtigt wird, etwa wenn ausreichend Informationen und/oder Daten für eine entsprechende Berücksichtigung zur Verfügung stehen. Es kann weiterhin vorgesehen sein, dass das Fahrzeug und/oder der Kollisionspartner während der Kollision nicht verformt wird. Die Bestimmung des Überlappungsmaßes, beispielsweise der Überlappung, der maximalen Überlappung oder der maximalen Überlappungsänderung, kann dadurch vereinfacht sein.

Allgemein kann das Ansteuern des ersten Fahrzeugs basierend auf der Parametrisierung vorgesehen sein, und/oder das Bereitstellen eines oder mehrerer Signale oder Daten, welche die Parametrisierung repräsentieren. Insbesondere kann das Ansteuern und/oder Bereitstellen vor der Kollision erfolgen. Das Ansteuern kann insbesondere das Ansteuern und/oder Auslösen eines oder mehrerer Funktionen des Fahrzeugs umfassen. Die Funktion oder Funktionen können insbesondere kollisionsvorbereitende Funktionalität betreffen, etwa ein Pre-Crash-System oder oder Pre-Crash Funktionalität. Die Funktionalität kann insbesondere aktive oder passive Systeme der Insassensicherheit betreffen, etwa die Aktivierung eines Airbags, eines Gurtstraffers, einer Warneinrichtung innerhalb oder außerhalb des Fahrzeugs, einer Bremseinrichtung, eines Antiblockiersystems, eines Spurhaltesystems, einer steuerbaren Federung, eines Antriebs, eines Getriebes, einer steuerbaren Aufhängung und/oder eines steuerbaren Differentials. Ein Signal oder Daten können entsprechend einer solchen Funktionalität bereitgestellt sein. Eine Funktionalität kann einer bestimmten Fahrzeugeinrichtung oder einer Baugruppe des Fahrzeugs zugeordnet sein, und/oder durch ein entsprechendes Fahrzeugsystem bereitgestellt sein.

Es ist auch eine Verarbeitungseinrichtung vorgesehen, welche dazu ausgebildet ist, ein hierin beschriebenes Verfahren durchzuführen und/oder anzusteuern. Die Verarbeitungseinrichtung kann für ein Fahrzeug vorgesehen sein, etwa zur Aufnahme in einem Fahrzeug vorgesehen sein, insbesondere dem ersten Fahrzeug. Beispielsweise kann die Verarbeitungseinrichtung in einer, oder als eine, Steuerbox für ein Fahrzeug vorgesehen oder implementiert sein.

In einer anderen Ausführungsform kann die Verarbeitungseinrichtung für einen Einsatz außerhalb des Fahrzeugs vorgesehen sein, etwa zur Kommunikation mit einem anzusteuernden und/oder mit Informationen zu versorgendem Fahrzeugsystem. Allgemein kann die Verarbeitungseinrichtung eine oder mehrere Schnittstellen aufweisen, etwa zum Bereitstellen von Signalen und/oder Daten, und/oder zur Ansteuerung des Fahrzeugs oder einer oder mehrerer Funktionalitäten, und/oder zum Empfang von Sensordaten.

Außerdem ist ein Fahrzeug mit einer hierin beschriebenen Verarbeitungseinrichtung vorgesehen.

Es wird auch ein Computerprogrammprodukt mit Programmcodemitteln beschrieben, welche dann, wenn sie auf einer Verarbeitungseinrichtung ausgeführt werden, ein hierin beschriebenes Verfahren steuern und/oder durchführen.

Eine Fahrzeugkollision kann allgemein eine bevorstehende und/oder wahrscheinlich bevorstehende und/oder mögliche Fahrzeugkollision sein, und/oder eine Fahrzeugkollision nach einem Szenario, welches etwa von einer Prognosefunktionalität und/oder Verkehrsüberwachungsfunktionalität bereitgestellt und/oder angefragt sein kann; derartige Funktionalitäten können etwa im ersten Fahrzeug oder außerhalb davon vorgesehen sein, und etwa über eine Funkschnittstelle kommunizieren.

Ein Umriss kann ein zweidimensionales oder dreidimensionales Modell des Objekts, etwa des Fahrzeugs oder Kollisionspartners, repräsentieren. Insbesondere kann der Umriss eine Breite und eine Länge des Fahrzeugs oder Objekts und/oder deren Verlauf repräsentieren; bei dreidimensionaler Darstellung kann auch die Höhe und/oder der Höhenverlauf repräsentiert sein. Der Umriss kann rechteckig bzw. kubisch sein, oder den Umriss des Objekts feiner repräsentieren, etwa in einer bestimmten Auflösung. Insbesondere für das erste Fahrzeug können Umrissdaten gespeichert sein, basierend auf welchen eine Umrissmodellierung erfolgen kann, insbesondere mit geringen Abweichungen zu einem tatsächlichen Umriss. Ein Umriss kann allgemein Außenlinien und/oder Außenseiten und/oder Außenflächen und/oder Außenwände des Objektes repräsentieren. Ein Teilumriss kann Linien oder Flächen aufweisen, welche innerhalb des Objekts modelliert sind.

Das erste Fahrzeug kann insbesondere ein Kraftfahrzeug wie einen Personenkraftwagen oder ein Lastkraftwagen sein, und/oder ein Personenfahrzeug oder ein Nutzfahrzeug, und/oder ein elektrisch betriebenes Fahrzeug, insbesondere mit höherem automated driving level und damit einhergehender hohen Ausstattungsrate an Komponenten zur Umfeldsensorik. Derart angetriebene Fahrzeuge eignen sich besonders für fortgeschrittene Ansteuerungen. Der Kollisionspartner kann ein anderes Fahrzeug umfassen, oder ein Objekt, etwa ein feststehendes Objekt oder Hindernis, etwa ein Bauwerk oder Baum, oder ein bewegliches Objekt wie einen oder mehrere Fußgänger.

Ein Umriss des Kollisionspartners kann insbesondere basierend auf Sensordaten erfolgen, welche insbesondere eine Geschwindigkeit und/oder Bewegungsrichtung und/oder einen Umriss repräsentieren können, zumindest einen Teil eines Umrisses. Etwa kann ein Umriss durch Radar- oder LiDAR-Daten repräsentiert sein, welche eine Ausdehnung des Kollisionspartners etwa in Breite und/oder Höhe und/oder Tiefe repräsentiert, und/oder durch Dopplermessung eine Geschwindigkeit bestimmte Ausdehnung. Alternativ oder zusätzlich können etwa Videodaten oder Bilddaten zur Bestimmung eines Umrisses verwendet werden, beispielsweise in Verbindung mit einer Datenbank, welche Bilder von Fahrzeugen und/oder Objekten entsprechenden Umrissdaten zuordnet. Allgemein kann ein Umriss einen Innenbereich innerhalb des Umrisses definieren, etwa eine Innenfläche, oder einen Querschnitt, oder ein Innenvolumen, etwa für einen dreidimensionalen Ansatz.

Das Modellieren eines Objekts und/oder Vorgangs kann allgemein das Repräsentieren und/oder Abschätzen des modelliertes Objekts oder Vorgangs durch mathematische Darstellung und/oder durch eine Simulation und/oder durch eine Verarbeitungseinrichtung umfassen, etwa in digitaler und/oder computerimplementierter Form. Die Modellierung kann erhebliche Vereinfachungen ermöglichen.

Eine relative Bewegung kann eine Bewegung zwischen dem Kollisionspartner und dem ersten Fahrzeug, und/oder zwischen dem ersten Umriss und dem zweiten Umriss repräsentieren. Die relative Bewegung kann in mehrerer diskreten Zeitschritten oder Zeitpunkten modelliert und/oder repräsentiert sein. Es versteht sich, dass durch einfache mathematische Transformation eine bestimmte Bewegungsdarstellung in eine andere Bewegungsdarstellung überführbar ist. Etwa kann in einem externen Ruhesystem vorgesehen sein, dass sich beide Kollisionspartner bewegen, während in einem Ruhesystem eines der Kollisionspartner sich nur der andere Kollisionspartner bewegt. Der erste und der zweite Umriss können sich derart zumindest entlang eines Teils der relativen Bewegung überlappen, dass sie zumindest an einem oder mehreren der Zeitpunkte und/oder Zeitschritte einer Überlappung stattfindet. Allgemein kann die relative Bewegung auf Geschwindigkeit und/oder Bewegungsrichtung der Kollisionspartner im Moment der Kollision basieren, etwa basierend auf tatsächlicher Bestimmung und/oder einer Berechnung und/oder Projektion der entsprechenden Geschwindigkeiten und/oder Richtungen, etwa gemäß einem Verkehrsszenario.

Das Modellieren der Kollision kann das Bestimmen einer Überlappung und/oder eines Überlappungsmaßes umfassen, etwa für einen oder mehrere Zeitschritte. Allgemein kann das Modellieren der Kollision das Führen der Umrisse entlang eines Bewegungspfades umfassen, welcher der relativen Bewegung entspricht. Die relative Bewegung, etwa Geschwindigkeit und/oder Richtung, kann während der Kollision konstant sein, etwa ohne Kollisionseffekte zu berücksichtigen.

Eine Überlappung kann allgemein das mindestens teilweise Überlappen von Umrissen umfassen, und/oder von den Umrissen zugeordneten Innenbereichen, insbesondere Flächen, und/oder das Schneiden einer oder mehrerer Umrisslinien des ersten Fahrzeugs mit einer oder mehreren Umrisslinien des Kollisionspartners. Das Überlappen kann eine Überlappungsfläche und/oder eine Überlappungslänge definieren, welche etwa durch einen Überlappungsanteil relativ zur Gesamtfläche und/oder Gesamtlänge repräsentiert und/oder angegeben sein kann.

Ein Überlappungsmaß kann insbesondere einen Überlappungsanteil repräsentieren. Eine Überlappungsfläche kann allgemein die Fläche sein, über welche die Umrisse überlappen und/oder die Fläche des Überlappungsbereiches sein. Eine Überlappungslänge kann der Länge der Linien entsprechen, die eine Überlappungsfläche und/oder einen Überlappungsbereich umgeben und/oder definieren. Ein Überlappungsvolumen kann einem Volumen entsprechen, das von dem Fahrzeug und dem Kollisionspartner gleichzeitig eingenommen wird. Dabei wird bevorzugt von einer gegenseitigen Durchdringbarkeit der Kollisionspartner ausgegangen.

Das Bestimmen der Parametrisierung kann insbesondere das Abbilden des Überlappungsmaßes auf eine Schwere der Kollision umfassen. Die Schwere kann insbesondere als eine Klasse innerhalb einer Schwereklassifikation repräsentiert sein, etwa nach AIS98 und/oder SimCS. Allgemein kann die Parametrisierung eine Klassifizierung der Schwere nach maximaler Überlappung und Überlappungssteigerung umfassen.

Sensordaten können einen oder mehrere Betriebsparameter des ersten Fahrzeugs und/oder des Kollisionspartners und/oder einen oder mehrere Umgebungsparameter repräsentieren. Betriebsparameter können insbesondere Geschwindigkeit umfassen oder sein oder repräsentieren, und/oder Bewegungsrichtung, und/oder Beschleunigung oder Bremsung, und/oder Beschleunigungsvermögen und/oder Bremsvermögen, und/oder Fahrzeuggeometrie wie etwa Breite und/oder Höhe und/oder Länge und/oder Form, und/oder Gewicht und/oder Beladung, und/oder Reifendruck und/oder Bremszustand, und/oder Vorhandensein von einer oder mehreren Personen.

Umgebungsparameter können etwa andere Fahrzeuge und/oder Hindernisse und/oder deren Betriebsparameter betreffen, und/oder eine Bebauung, und/oder Wetter, und/oder Bodenbeschaffung, und/oder Sichtverhältnisse, und/oder Haftung am Boden, etwa bei Regen und/oder Eis. Sensordaten bezüglich des ersten Fahrzeugs können etwa von Sensoren des ersten Fahrzeugs bereitgestellt sein, etwa einem oder mehreren Geschwindigkeitssensoren, und/oder Drehmomentsensoren, und/oder Positionssensoren, und/oder Richtungssensoren, und/oder Beladungssensoren, und/oder Luftdrucksensoren, und/oder Personensensoren, und/oder Beschleunigungs- und/oder Bremssensoren.

Sensordaten bezüglich des Kollisionspartners und/oder der Umgebung können von diesen zugeordneten Sensoren stammen oder bereitgestellt sein, und etwa durch Funkübertragung bereitgestellt sein. Alternativ oder zusätzlich können Sensordaten bezüglich des Kollisionspartners und/oder der Umgebung von Sensoren des ersten Fahrzeugs stammen und/oder bereitgestellt sein, etwa durch aktive und/oder passive Sensorik, und/oder Radar, und/oder Lidar, und/oder Ultraschall, und/oder optische oder Infrarot-Sensorik, etwa durch eine oder mehrere Kameras. Es ist vorstellbar, dass unterschiedliche Arten von Betriebsparametern für unterschiedliche Kollisionspartner und/oder Umgebungsobjekte vorhanden sind. Beispielsweise können für das erste Fahrzeug Sensordaten vorliegen, welche für das Verfahren für andere Fahrzeuge nicht vorliegen, etwa weil sie nicht übertragen werden. In einigen Fällen können ein oder mehrere Betriebsparameter aus einem dem ersten Fahrzeug zugeordneten Speicher stammen, etwa einer Datenbank, welcher im Wesentlichen feststehende Parameter speichern kann.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller oder eine Verarbeitungsschaltung und/oder einen Speicher umfassen, und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun mit Bezug auf die beigefügten Figuren genauer beschrieben, in denen:
- Figur 1: ein beispielhaftes Kollisionsszenario;
- Figur 2 a) bis c): unterschiedliche Zeitpunkte einer beispielhaften Kollisionsmodellierung;
- Figur 3 a) bis c): unterschiedliche Zeitpunkte einer weiteren beispielhaften Kollisionsmodellierung;
- Figur 4: beispielhafte Teilumrisse; und
- Figur 5: ein Ablaufdiagramm für ein beispielhaftes Verfahren
darstellt.

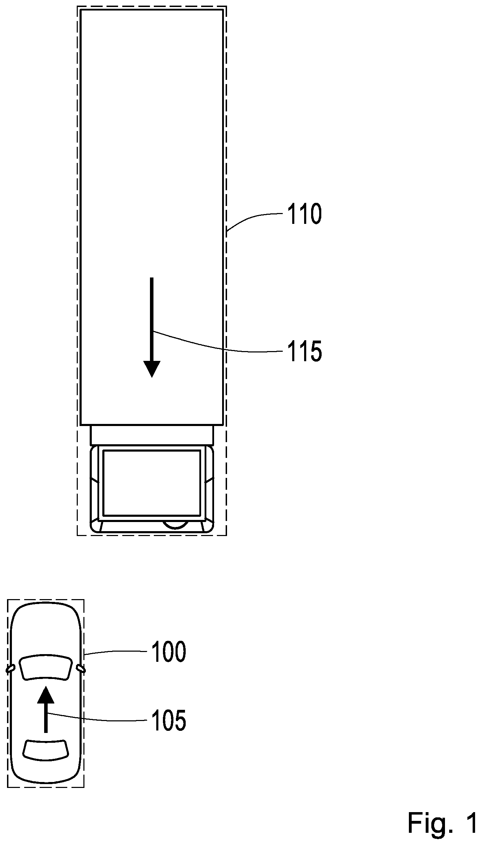

Figur 1 zeigt ein beispielhaftes Kollisionsszenario, in welchem sich ein erstes Fahrzeug mit einem ersten Umriss 100 und einem ersten Geschwindigkeitsvektor 105 und ein zweites Fahrzeug als beispielhafter Kollisionspartner mit einem zweiten Umriss 110 und einem zweiten Geschwindigkeitsvektor 115 aufeinander zu bewegen. Der zweite Umriss 100 des ersten Fahrzeugs ist im vorliegenden Beispiel deutlich schmaler und kürzer länger als der des zweiten Fahrzeugs, etwa wenn ein PKW auf einen LKW trifft. Es kann aber auch vorkommen, dass die Umrisse im Wesentlichen gleich groß sind, etwa bei Fahrzeugen gleicher oder vergleichbarer Größe.

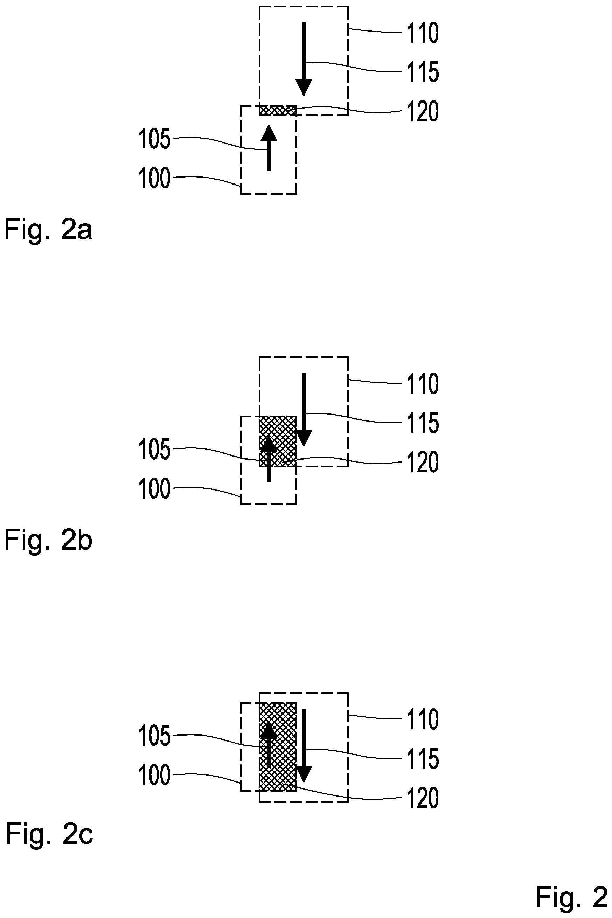

Figur 2 zeigt schematisch verschiedene Zeitpunkte einer Kollisionsmodellierung, zu denen sich die Kollisionspartner mit erstem Umriss 100 und zweitem Umriss 110 in einem Überlappungsbereich 120 überlappen.

Zu verschiedenen Zeitpunkten hat der Überlappungsbereich 120 unterschiedliche Größen. Figur 2 a) zeigt einen Zeitpunkt direkt nach Beginn einer Kollision, mit noch kleinem Überlappungsbereich 120. Figur 2b) zeigt einen späteren Zeitpunkt, zu welchem der Überlappungsbereich 120 zugenommen hat. Figur 2c) zeigt einen noch späteren Zeitpunkt, zu welcher eine maximal großer Überlappungsbereich 120 während dieser Kollision vorliegt. Es können mehrere Zeitpunkte mit maximaler Überlappung vorliegen, die etwa von den Umrissen 100, 110 und den Geschwindigkeiten abhängig sein können.

Ein Überlappungsmaß für einen der dargestellten Zeitpunkte kann beispielsweise durch die Fläche des Überlappungsbereiches 120 gegeben sein, und/oder durch die Länge der Linien, welche den Überlappungsbereiches 120 umgeben und/oder definieren. Werden die Fahrzeuge im dreidimensionalen Raum betrachtet, so kann ein Volumen, das zeitgleich durch beide Fahrzeuge ausgefüllt ist, als Überlappungsbereich 120 angesehen werden. Es kann auch vorgesehen sein, eine zeitliche Änderung des Überlappungsbereiches 120, etwa des Volumens, der Fläche oder der Linienlänge, als Überlappungsmaß zu berücksichtigen.

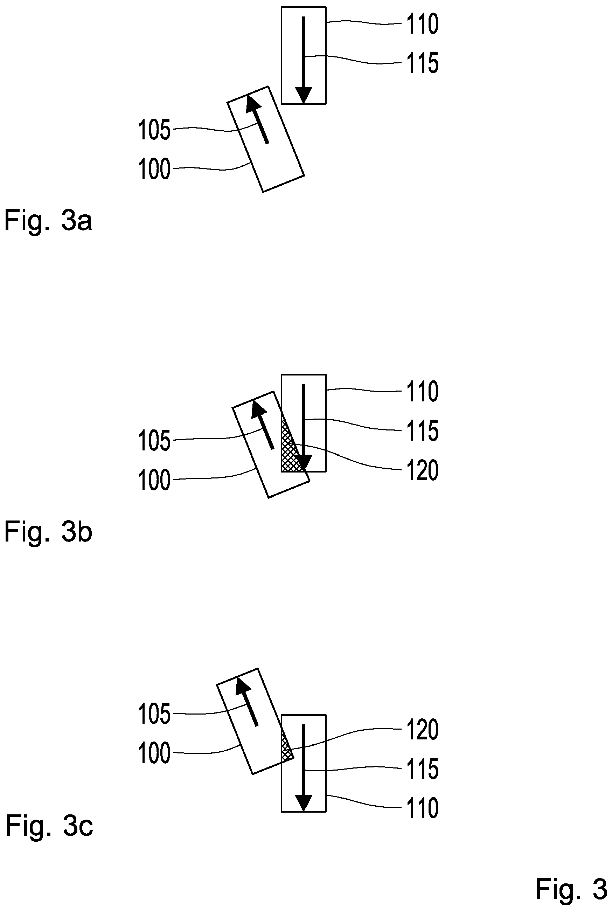

Figur 3 zeigt schematisch verschiedene Zeitpunkte der Kollisionsmodellierung in einem anderen Szenario, in welchem die Fahrzeuge nicht direkt aufeinander zufahren, sondern ihre Geschwindigkeitsvektoren 105, 115 einen spitzen Winkel miteinander einschließen. In Figur 3 a) hat die Bewegung noch nicht zu einer eigentlichen Kollision geführt; ein solcher Zeitpunkt kann Teil des Modellierens der Kollision sein, oder das Modellieren kann mit einem Zeitpunkt beginnen, bei dem im Modell schon eine Überlappung oder Kollision stattfindet. In Figur 3 b) hat eine leicht schräge Kollision stattgefunden. In Figur 3 c) ist ein noch späterer Zeitpunkt dargestellt. In Figur 3 b) ist die in diesem Beispiel größte Überlappung dargestellt.

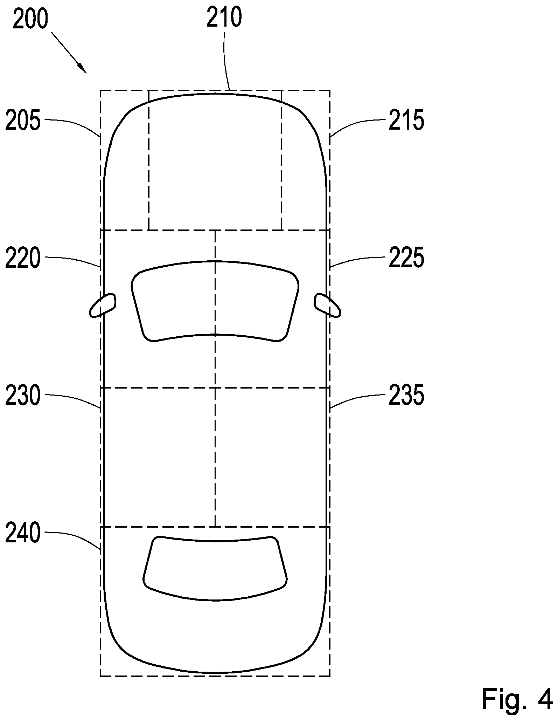

Figur 4 zeigt einen beispielhaften Umriss 200 eines Fahrzeugs, der sich aus Teilumrissen zusammensetzt. Im Beispiel sind ein Teilumriss 205 für den linken vorderen Radraum vorgesehen, sowie ein Teilumriss 210 für den Motorraum, und ein Teilumriss 215 für den rechten vorderen Radraum. Ferner sind ein Teilumriss 220 für einen Fahrerraum und ein Teilumriss 225 für einen Beifahrerraum vorgesehen, sowie Rücksitzpassagierräume 230, 235. Am Ende des Fahrzeugs ist ein Teilumriss 240 für einen Kofferraum vorgesehen, welcher beispielsweise Räume für die Hinterräder umfassen kann.

Den unterschiedlichen Teilumrissen 205-240 können zur Bestimmung eines Überlappungsmaßes unterschiedliche Gewichte zugeteilt werden, beispielsweise nach Funktion und/oder Gewicht und/oder Gefährdung und/oder Struktur und/oder Steifigkeit und/oder allgemein konstruktiven Eigenschaften der entsprechenden Fahrzeugstruktur, etwa hinsichtlich Energieaufnahme und/oder Verformung. Das Gewicht und/oder die Gewichtung kann jeweils von Sensordaten und/oder anderen Informationen abhängen. Etwa kann ein höheres Gewicht und/oder eine höhere Gewichtung für einen Teilumriss mit einer Person vorgesehen sein, als wenn der Teilumriss nicht besetzt ist. Unterschiedliche Fahrzeuge können unterschiedliche Teilumrisse und/oder zugeordnete Funktionen und/oder Gewichte aufweisen.

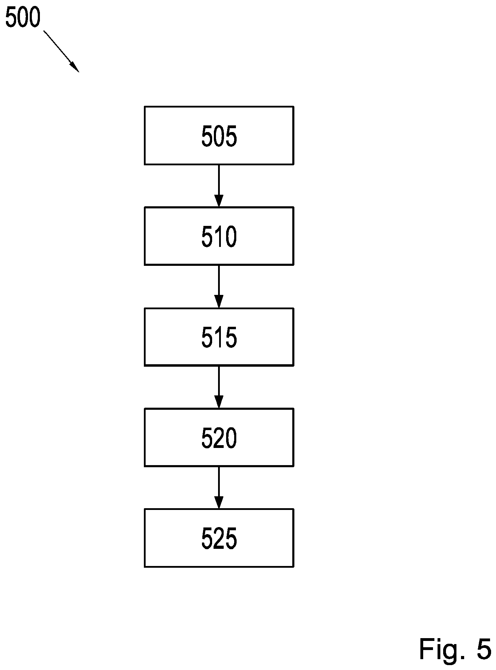

Figur 5 zeigt ein Ablaufdiagramm für ein beispielhaftes Verfahren 500. Das Verfahren 500 kann unmittelbar vor einer bevorstehenden oder drohenden Kollision eines ersten Fahrzeugs mit einem Kollisionspartner durchgeführt werden. Dabei kann eine Abschätzung einer zu erwartenden Parametrierung der Kollision erfolgen, die verwendet werden kann, um mögliche Folgen der Kollision möglichst zu minimieren oder zu lindern. Das Verfahren 500 kann aber auch im Rahmen einer Simulation angewandt werden, um eine Parametrierung in einem vorbestimmten Kollisionsszenario zu bestimmen. Die Parametrierung kann dazu verwendet werden, das erste Fahrzeug sicherer zu gestalten, beispielsweise im Rahmen eines Entwicklungsprozesses für das erste Fahrzeug.

In einer Aktion 505 kann ein erster Umriss eines ersten Fahrzeugs modelliert werden. Dabei können mehrere Teilumrisse berücksichtigt werden. In einer Aktion 510 kann ein zweiter Umriss eines potentiellen Kollisionspartners modelliert werden. Aktionen 505 und 510 können auch in anderer Reihenfolge und/oder parallel durchgeführt werden.

In Aktion 515 kann eine Kollision modelliert werden. Dabei kann eine relative Bewegung der Kollisionspartner und/oder ihrer Umrisse modelliert werden, zum Beispiel Umrisse 100, 110. Bei der Bewegung findet zumindest zu einem Teil der Bewegung eine zumindest teilweise Überlappung der Umrisse statt. Es kann vorgesehen sein, dass für einen oder mehrere Zeitpunkte mit Überlappung ein Überlappungsmaß bestimmt wird. Insbesondere kann eine maximale Überlappung, etwa ein maximales Überlappungsvolumen, eine maximale Überlappungsfläche und/oder eine maximale Linienlänge der Überlappung bestimmt werden.

Außerdem kann eine maximale Überlappungszunahme als maximale Änderung bestimmt werden. Das Überlappungsmaß kann auf der Überlappungsfläche und/oder Änderung, insbesondere deren Maxima basieren, wobei eine Gewichtung berücksichtigt werden kann und/oder wobei das Überlappungsmaß auf einer Gewichtung basieren kann. Die Gewichtung kann etwa auf Teilumrissen basieren, und/oder auf Funktion und/oder Geschwindigkeitsbereich der relativen Geschwindigkeit und/oder Richtung der Kollision. Insbesondere kann ein Überlappungsmaß eine seitliche oder rückwärtige Kollision anders (etwa niedriger) Gewichten als eine Frontalkollision; wobei eine seitliche Kollision direkt in einen besetzten Personenraum höher gewichtet sein kann, etwa in einen Fahrerraum oder Beifahrer- oder Passagierraum.

In einer Aktion 520 kann eine Parametrisierung basierend auf dem Überlappungsmaß bestimmt werden. Dies kann insbesondere das Abbilden des Überlappungsmaßes auf eine Parametrisierung umfassen. Insbesondere kann eine Schwere der Kollision bestimmt werden, etwa basierend auf einer Schwereklassifizierung und/oder auf einem oder mehreren Schwellenwerten. Ein erster Schwellenwert und/oder eine erste Schwellenwertgruppe kann beispielsweise die maximale Überlappung betreffen, und/oder ein zweiter Schwellenwert und/oder eine zweite Schwellenwertgruppe eine maximale Änderung.

Ein Schwellenwert und/oder eine Schwellenwertgruppe können berechnet und/oder aus Simulationen und/oder Experimenten bestimmt oder bestimmbar sein. Schwellenwerte und/oder Schwellenwertgruppen können Fahrzeugspezifisch und/oder typisch für einen Fahrzeugtyp oder ein Fahrzeugmodell sein. Eine Schwellenwertgruppe kann allgemein mehrere Schwellenwerte umfassen, welche der Größe nach gestaffelt sein können, und/oder die unterschiedliche Teilumrisse und/oder unterschiedliche Kollisionsrichtungen betreffen. So können etwa unterschiedliche Schwellenwerte für seitliche und/oder rückwärtige und frontale Kollisionen vorgesehen sein.

In einer Aktion 525 kann eine Ansteuerung des Fahrzeugs basierend auf der Parametrisierung erfolgen. Alternativ oder zusätzlich können Signale oder Daten an Fahrzeugeinrichtungen bereitgestellt werden. Insbesondere können abhängig von der bestimmten Parametrisierung ein oder mehrere Pre-Crash Systeme angesteuert werden, etwa ein Airbag und/oder ein Gurtstraffer und/oder eine Sitzfunktion.

Allgemein kann eine Schwere eine Kollision etwa nach AIS98 oder SimCS klassifiziert sein:

| AIS98 | Verletzungsschwere | SimCS |
|---|---|---|
| 0 | Unverletzt | 1 |
| 1 | Gering | 2 |
| 2 | Ernsthaft | 2 |
| 3 | Schwer | 2 |
| 4 | Sehr schwer | 3 |
| 5 | Kritisch | 3 |
| 6 | Maximal (nicht behandelbar) | 3 |

Ein Überlappungsmaß kann etwa auf eine derartige Parametrisierung der Schwere abgebildet werden, und/oder das Fahrzeug kann entsprechend angesteuert werden.

Eine Schwereklassifikation basierend auf einem Überlappungsmaß, welches maximale Überlappung und maximale Überlappungszunahme berücksichtigt, kann etwa wie folgt klassifiziert sein:

| | niedrige maximale Überlappung | hohe maximale Überlappung |
|---|---|---|
| niedrige maximale Zunahme | Wahrscheinlich keine Verletzung, oberflächlicher Fahrzeugschaden erwartet; | deutlicher Schaden am Fahrzeug; |
| | | SimCS: 2 |
| | SimCS: 1 | |
| hohe maximale Zunahme | leichte Verletzung, deutlicher Schaden am Fahrzeug; | Ernsthafte oder tödliche Verletzungen; erheblicher Schaden am Fahrzeug; |
| | SimCS: 2 | |
| | | SimCS: 3 |

Ein Schwellenwert für die maximale Überlappung kann beispielsweise derart gewählt sein, dass eine Überlappungsfläche oder Überlappungslänge von N1 % oder mehr als "hoch" oder maximale Überlappung klassifiziert ist, wobei N1 beispielsweise 20, oder 25 oder 30 betragen kann. Liegt eine niedrigere Überlappung vor, kann als "niedrig" klassifiziert sein.

Eine Zunahme kann insbesondere hinsichtlich benachbarter Zeitschritte bestimmt sein. Die Zunahme kann sich allgemein auf die Zunahme der Überlappung, etwa einer Überlappungsfläche und/oder Linienlänge, beziehen, etwa bezogen auf eine Gesamtfläche und/oder Gesamtlinienlänge eines Umrisses, insbesondere des ersten Umrisses. Die Zunahme kann insbesondere als N2 % Zunahme der überlappenden Fläche und/oder Linienlänge in einem Zeitschritt dargestellt sein, wobei N2 auf die Gesamtfläche oder Gesamtlinienlänge des Umrisses bezogen sein kann. N2 kann etwa 10 oder 15 sein. Für N2 =10 würde dann eine Zunahme der Überlappung von 10 % oder mehr der Gesamtfläche oder Gesamtlänge des Umrisses in einem Zeitschritt, zwischen zwei benachbarten Zeitpunkten, als "hoch" klassifiziert. Liegt die Zunahme für alle Zeitschritte darunter, würde als "niedrig" klassifiziert. N2 kann von der relativen Geschwindigkeit und/oder dem Aufprallwinkel abhängen.

Allgemein können Schwereklassifikationen mit zusätzlichen Stufen und/oder Schwellenwerten verwendet werden, etwa hinsichtlich der Überlappung und/oder der Überlappungszunahme.

Die beschriebenen Ansätze erlauben eine verlässliche Kollisionsanalyse, bevor die Kollision tatsächlich eintritt. Somit können geeignete Vorbereitungen getroffen werden. Insbesondere bei verhältnismäßig niedrigen Geschwindigkeiten kann angemessen reagiert werden, etwa indem zu starke Eingriffe in die Fahrzeugsteuerung und/oder auf Personen in dem Fahrzeug vermieden werden können, wenn keine große Verletzungsgefahr besteht.

### Bezugszeichen

- 100: erster Umriss des ersten Fahrzeugs
- 105: erster Geschwindigkeitsvektor
- 110: zweiter Umriss des zweiten Fahrzeug
- 115: zweiter Geschwindigkeitsvektor
- 120: Überlappung/Überlappungsmaß

- 200: Umriss mit Teilumrissen
- 205: linker vorderer Radraum
- 210: Motorraum
- 215: rechter vorderer Radraum
- 220: Fahrer
- 225: Beifahrer
- 230: linker Rücksitz
- 235: rechter Rücksitz
- 240: Kofferraum

- 500: Verfahren
- 505: Modellieren eines Umrisses eines ersten Fahrzeugs
- 510: Modellieren eines Umrisses eines Kollisionspartners
- 515: Modellieren einer Kollision
- 520: Parametrisierung auf der Basis eines Überlappungsgrads bestimmen
- 525: Ansteuern des Fahrzeugs auf der Basis der Parametrisierung

## Patentansprüche

1. Verfahren (500) zum Bestimmen einer Parametrisierung für eine Fahrzeugkollision, wobei das Verfahren umfasst: Modellieren (505) eines ersten Umrisses (100) eines ersten Fahrzeugs; Modellieren (510) eines zweiten Umrisses (110) eines Kollisionspartners des ersten Fahrzeugs; Modellieren (515) einer Kollision des ersten Fahrzeugs mit dem Kollisionspartner basierend auf einer relativen Bewegung des ersten und zweiten Umrisses (100, 110), wobei bei der relativen Bewegung der erste und zweite Umriss (100, 110) sich zumindest entlang eines Teils der relativen Bewegung überlappen; Bestimmen (520) der Parametrisierung basierend auf einem Überlappungsmaß (120) der Umrisse (100, 110).

2. Verfahren (500) nach Anspruch 1, wobei das Überlappungsmaß auf einer Linienüberlappung der Umrisse (100, 110) basiert.

3. Verfahren (500) nach Anspruch 1 oder 2, wobei das Überlappungsmaß auf einer Flächenüberlappung der Umrisse basiert.

4. Verfahren (500) nach einem der vorangehenden Ansprüche, wobei das Überlappungsmaß auf einer Durchdringung der Umrisse basiert.

5. Verfahren (500) nach einem der vorhergehenden Ansprüche, wobei das Überlappungsmaß einer maximalen Überlappung (120) und/oder einer zeitlichen Änderung der Überlappung entspricht.

6. Verfahren (500) nach einem der vorhergehenden Ansprüche, wobei die Parametrisierung eine Schwere der Kollision repräsentiert.

7. Verfahren (500) nach einem der vorhergehenden Ansprüche, wobei die Parametrisierung ferner auf Sensordaten basiert.

8. Verfahren (500) nach einem der vorhergehenden Ansprüche, wobei die Modellierung des ersten Umrisses (100) und/oder des zweiten Umrisses (120) auf Teilumrissen (200; 205-240) basiert.

9. Verfahren (500) nach einem der vorhergehenden Ansprüche, wobei die relative Bewegung eine durch die Kollision unbeeinflusste Bewegung repräsentiert.

10. Verfahren (500) nach einem der vorhergehenden Ansprüche, wobei das Verfahren (500) das Ansteuern (525) des ersten Fahrzeugs und/oder Fahrzeugkomponenten des ersten Fahrzeugs basierend auf der Parametrisierung umfasst.

11. Verarbeitungseinrichtung, welche dazu ausgebildet ist, ein Verfahren (500) nach einem der vorangehenden Ansprüche durchzuführen.

12. Fahrzeug mit einer Verarbeitungseinrichtung nach Anspruch 9.

13. Computerprogrammprodukt mit Programmcodemitteln, welche dann, wenn sie auf einer Verarbeitungseinrichtung ausgeführt werden, ein Verfahren (500) nach einem der Ansprüche 1 bis 8 steuern und/oder durchführen.
